# EUROPEAN PATENT APPLICATION

(11) **EP 2 489 993 A1**
(43) Date of publication of application: **22.08.2012**
(21) Application number: 12151925.0
(22) Date of filing: 20.01.2012
(51) Int. Cl.: G01F 15/00

(54) **Flow measurement device**

(30) Priority: 22.01.2011 CN 201120020951 U
(71) Applicant: Grundfos Holding A/S, 8850 Bjerringbro (DK); Grundfos Pumps (Shanghai) Co., Ltd., Shanghai 200336 (CN)
(72) Inventor: Yang, Yusen, Beijing 100125 (HK); Li, Zheng, Shanghai 200336 (HK); Dyrbye, Karsten, 8600 Silkeborg (DK); Pedersen, Casper, 7800 Skive (DK); Du, Jun, Shanghai 200336 (HK); Ommen, Thomas, 8310 Tranbjerg (DK)
(74) Representative: Patentanwälte Vollmann & Hemmer

(57) **Abstract**

The present invention provides a flow measuring device, comprising a flow meter mounted in a fluid pipeline for measuring flow; a control valve mounted in the fluid pipeline for opening or closing the fluid pipeline; a data processer for controlling opening or closing of the control valve, when the flow inside the fluid pipeline is less than a set value, the data processor controls the control valve to close, after a set time interval, the data processor controls the control valve to open. Since both the flow meter and the control valve are mounted in the same fluid pipeline, the data processor can send a signal of closing the control valve, so that the present invention can ensure that the flow inside the fluid pipeline always maintains above the set value, and thusly an accurate measurement can be obtained; and simultaneously, some flow meters with a small range ratio at a low price can be widely applied in measuring devices, such that a low cost based on the accurate measurement can be achieved.

## Description

The present invention relates to a flow measuring device.

The flow measuring devices at present may be classified into a differential pressure flow meter, a positive displacement flow meter, a current-type flow meter and so on depending on a measurement principle; moreover, the flow measuring devices may be classified into a venturi meter, an orifice flow meter, a mechanical turbine flow meter, an ultrasonic flow meter, an electromagnetic flow meter, a vortex flow meter and so on depending on the actual products. Most of these flow meters have a large measuring range, that is, a ratio between the normal flow quantity which can be measured and the minimum flow quantity is large. The flow meters with large range ratios can be advantageously applied in various fields, however, in fact, due to high product costs, they are limited to be applied in some fields, particularly in hydraulic power field, thermal power field and so on. On the other hand, the flow meters with small range ratios have an advantage of a low product cost; however, due to limitation of their low range ratios, their application fields are narrow, in particular, the venturi meter, the orifice flow meter, and the vortex flow meter would produce large measurement errors or even cannot perform measurement at all at a low flow speed.

The present invention is directed to solve the technical problem that the existing flow measuring device has an inaccurate measurement or high cost.

To achieve this purpose, the present invention employs the following technical solutions:

The flow measuring device according to the present invention may comprise a flow meter mounted in a fluid pipeline for measuring flow; a control valve mounted in the fluid pipeline for opening or closing the fluid pipeline; and a data processor for collecting and processing data measured by the flow meter to control opening or closing of the control valve, when the flow (flow rate) inside the fluid pipeline is less than a set value, the data processor controls the control valve to close, and after a set time interval, the data processor controls the control valve to open.

The data processor may be a processing chip.

The flow meter may be a vortex flow meter, a venturi meter or an orifice flow meter.

The control valve may be an electric ball valve or a thermoelectric valve.

The flow meter and the control valve may be disposed separately in structure.

The flow meter may be a vortex flow meter comprising a pipe-shaped flow meter casing, a flow resistance post fixed inside the pipe-shaped flow meter casing, and a sensor inserted in the pipe-shaped flow meter casing and located at a rear of the flow resistance post.

The control valve may be an thermoelectric valve comprising a pipe-shaped valve body, a valve handle, and a thermoelectric actuator, wherein a valve seating having a valve port is provided inside the valve body; the valve handle is moved by the thermoelectric actuator to pass through the pipe-shaped valve body; and a valve handle plug provided at an end of the valve handle cooperates with the valve port.

The flow meter may be integrated with the control valve in structure.

The flow meter may be a venturi meter comprising a pipe-shaped housing, a venturi tube provided inside the pipe-shaped housing, a joining pipe (a pressure guiding pipe), and a differential pressure transmitter, wherein the joining pipe has one end communicating with the pipe-shaped housing in the front of the venturi tube and the other end communicating with the middle of the venturi tube, the differential pressure transmitter is inserted in the joining pipe. The control valve may be an electric ball valve comprising a valve ball rotatably provided inside the pipe-shaped housing, an electric actuator, and a valve handle, wherein the valve ball is rotated by the electric actuator via the valve handle.

From the above technical solutions, it can be seen that the flow measuring device of the present invention has advantages and positive effects below: according to this invention, since both the flow meter and the control valve are mounted in the same fluid pipeline, the flow meter can measure the flow inside the fluid pipeline; and when the flow in the fluid pipeline is less than the set value, the data processor can close the control valve. Therefore, the present invention can ensure that the flow in the fluid pipeline always be maintained above a set minimum flow, i.e., the present invention can ensure the measuring precision of the flow meter, so the measurement of the flow measuring device according to the present invention is accurate; and simultaneously, some flow meters with a small range ratio at a low price can widely applied in the measuring devices, so that the present invention can reduce the cost on the basis of an accurate measurement.

The foregoing and the other purposes, features and advantages will become more apparent from the following detailed description of the present invention which is provided in conjunction with the accompanying drawings.

FIG. 1 is a structural principle diagram of a flow measuring device according to the present invention;

FIG. 2 is a structural diagram of a flow measuring device according to an embodiment of the present invention showing that a control valve and a flow meter are disposed separately;

FIG. 3 is a structural diagram of a flow measuring device according to another embodiment of the present invention showing that a flow meter is integrated with a control valve in structure; and

FIG. 4 is a relation diagram showing a control valve open/close signal versus time and a measured flow versus time of the flow measuring device according to the present invention.

Reference will be made in detail to specific embodiments of the present invention. It should be noted that the embodiments described herein are merely exemplary but not construed as limiting the present invention.

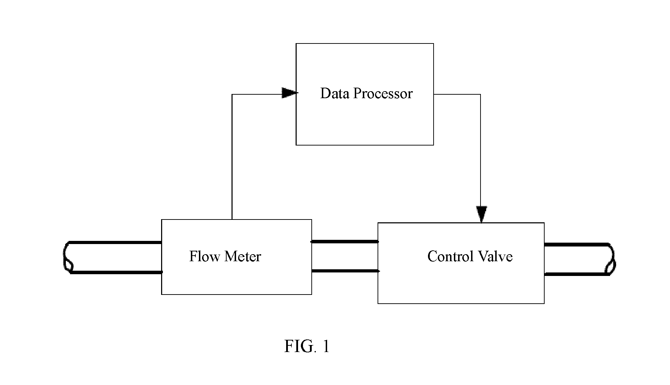

As shown in FIG. 1, a flow measuring device according to the present invention comprises a data processor, a flow meter and a control valve, wherein the flow meter and the control valve are mounted on a same fluid pipeline. When a flow inside the fluid pipeline is less than a set value of the flow meter, the data processor can control the control valve to close. The set value of the flow meter may be or approximate to a minimum flow value within a measuring range indicated on the flow meter. After a set time interval, the data processor controls the control valve to open, meanwhile, if the flow inside the fluid pipeline measured is still less than the set value (minimum flow value) of the flow meter or the flow meter could not measure flow data, the data processor will control the control valve to close again, the process will be repeated in such way on and on. The time interval may be set in a range of 1-30 minutes or in other time ranges, mainly based on factors such as the specific situation where the present invention is applied. The data processor may be a processing chip and the like, and the data processor may be built-in the flow meter or the control valve.

The flow meter and the control valve according to the present invention may be disposed separately in structure, that is, the flow meter and the control valve are two devices being independent of each other and independently mounted in the same fluid pipeline. The control valve may be a widely known electric ball valve, a thermoelectric valve or automatic control valves of other types. The flow meter may be selected from a widely known vortex flow meter, a venturi meter, or an orifice flow meter. Particularly, the flow meter, having a small range ratio and cooperating with the control valve, can achieve substantive advantages such as an accurate measurement and a low cost.

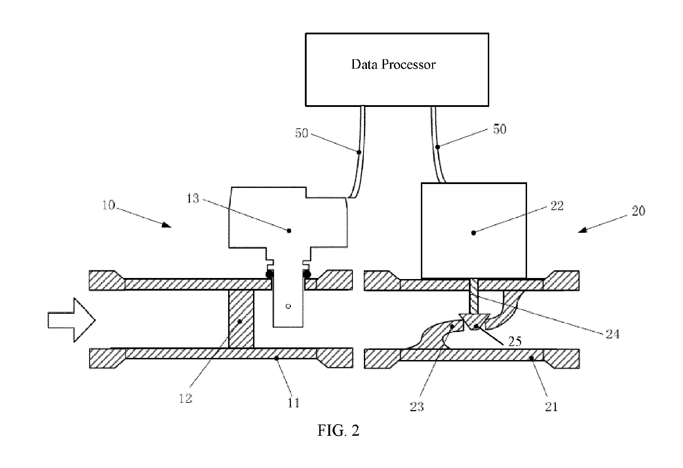

As shown in FIG. 2, the flow meter may be selected as a vortex flow meter 10 comprising a pipe-shaped flow meter casing 11, a flow resistance post 12 fixed inside the pipe-shaped flow meter casing 11 and a sensor 13 inserted in the pipe-shaped flow meter casing 11 and located in the rear of (downstream of) the flow resistance post 12. Both ends of the flow meter casing 11 in use are connected to the fluid pipeline via flanges or screw threads. The control valve may be selected as a thermoelectric valve 20 comprising a pipe-shaped valve body 21, a valve handle 24 and a thermoelectric actuator 22. A valve seating 23 having a valve port is provided inside the valve body 21. The valve handle 24 may be moved by the thermoelectric actuator 22 to pass through the pipe-shaped valve body 21. A valve handle plug 25 provided at an end of the valve handle 24 cooperates with the valve port. Data wires 50 are connected between the control valve and the data processor to transmit signals, or alternatively, the control valve and the data processor may perform wireless signal transmission therebetween. In assembling, both ends of the valve body 21 are connected in the fluid pipeline via flanges or screw threads.

The vortex flow meter 10 transmits measured flow data to the data processor via a data wire 50 or in a wireless way. The data processor compares the measured flow value with the set value. If the measured flow value is less than the set value, the data processor sends an instruction to the control valve to close it. After 1-30 minutes, the data processor controls the control valve to open. Here, if the flow value measured by the flow meter is still less than the set value, the data processor controls the control valve such that the control valve is close again. The process will be repeated in such way until the flow value measured by the flow meter continuously maintains above the set value, and then the control valve will be always in an open state. The set value according to this embodiment can be the minimum flow value of the measuring range indicated on the vortex flow meter 10.

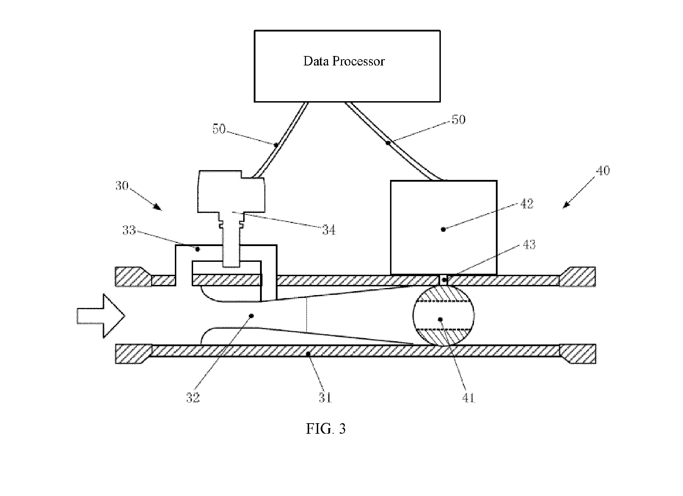

In the present invention, the flow meter can also be integrated with the control valve in structure. As shown in FIG. 3, the flow meter may be selected as a venturi meter 30 comprising a pipe-shaped housing 31, a venturi tube 32 provided inside the pipe-shaped housing 31, a joining pipe 33, and a differential pressure transmitter 34, wherein the joining pipe 33 has one end communicating with the pipe-shaped housing 31 in the front of (upstream of) the venturi tube 32 and the other end communicating with the middle of the venturi tube 32, and the differential pressure transmitter 34 is inserted in the jointing pipe 33. The control valve may be selected as an electric ball valve 40 comprising a valve ball 41 rotatably provided inside the pipe-shaped housing 31, an electric actuator 42 and a valve handle 43, wherein the valve ball 41 is rotated by the electric actuator 42 via the valve handle 43. Here, the venturi meter 30 and the electric ball valve 40 share the same pipe-shaped housing 31. It is only required in assembly that both ends of the pipe-shaped housing 31 are connected to the fluid pipeline by flanges or screw threads, which is convenient and efficient to assembly the flow meter and the control valve. In this embodiment, the process of the data processor controlling the control valve is substantially same as the case that the flow meter and the control valve are disposed separately in structure, so no description in detail is redundantly repeated here.

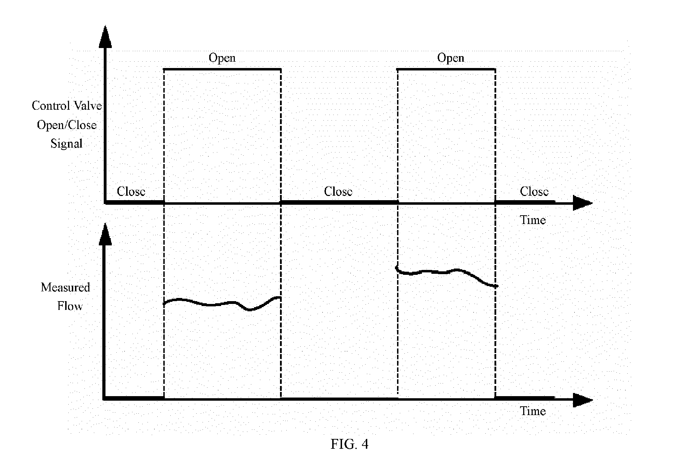

As shown in FIG. 4, because the control valve is closed when the flow is lower than the minimum flow of the flow meter, fluid is prevented from flowing when the flow is lower than the minimum flow of the flow meter, as a result, the present invention can measure the flow of the fluid pipeline very accurately.

The flow measuring device according to the present invention can be widely applied in all situations requiring improved flow measuring precision and flow control, such as a heat supplying system, an air-conditioning system, and so on.
Although the present invention has been described with reference to several representative embodiments, it shall be understood that the words that have been used are explanative and exemplary, rather than restrictive. As the present invention may be embodied in a plurality of forms without departing from the spirit or essential characteristics thereof. It shall also be understood that the above-described embodiments are not limited by any of the details of the foregoing description. Rather, the above-described embodiments shall be construed broadly within the spirit and scope of the present invention as defined in the appended claims. Therefore, all changes and modifications that fall within the metes and bounds of the claims, or equivalents of such metes and bounds are therefore intended to be embraced by the appended claims.

## Claims

1. A flow measuring device, **characterized in that** the flow measuring device comprises: a flow meter mounted in a fluid pipeline for measuring fluid flow; a control valve mounted in the fluid pipeline for opening or closing the fluid pipeline; and a data processor for collecting and processing data measured by the flow meter to control opening or closing of the control valve, when the flow inside the fluid pipeline is less than a set value, the data processor controls the control valve to close, and after a set time interval, the data processor controls the control valve to open.

2. The flow measuring device according to claim 1, **characterized in that** the data processor is a processing chip.

3. The flow measuring device according to claim 1 or 2, **characterized in that** the flow meter is a vortex flow meter, a venturi meter or an orifice flow meter.

4. The flow measuring device according to one of the preceding claims **characterized in that** the control valve is an electric ball valve or a thermoelectric valve.

5. The flow measuring device according to one of the preceding claims, **characterized in that** the flow meter and the control valve are disposed separately in structure.

6. The flow measuring device according to one of the preceding claims, **characterized in that** the flow meter is a vortex flow meter (10) comprising a pipe-shaped flow meter casing (11), a flow resistance post (12) fixed inside the pipe-shaped flow meter casing (11), and a sensor (13) inserted in the pipe-shaped flow meter casing (11) and located in a rear of the flow resistance post (12).

7. The flow measuring device according to one of the preceding claims, **characterized in that** the control valve is a thermoelectric valve (20) comprising a pipe-shaped valve body (21), a valve handle (24) and a thermoelectric actuator (22); a valve seating (23) having a valve port is provided inside the valve body (21); the valve handle (24) is moved by the thermoelectric actuator (22) to pass through the pipe-shaped valve body (21); and a valve handle plug (25) provided at an end of the valve handle (24) cooperates with the valve port.

8. The flow measuring device according to one of the preceding claims, **characterized in that** the flow meter is integrated with the control valve in structure.

9. The flow measuring device according to one of the preceding claims , **characterized in that** the flow meter is a venturi meter (30) comprising a pipe-shaped housing (31), a venturi tube (32) provided inside the pipe-shaped housing (31), a joining pipe (33) and a differential pressure transmitter (34); the joining pipe (33) has one end communicating with the pipe-shaped housing (31) in front of the venturi tube (32) and the other end communicating with the middle of the venturi tube (32); the differential pressure transmitter (34) is inserted in the joining pipe (33); the control valve is an electric ball valve (40) comprising a valve ball (41) rotatably provided inside the pipe-shaped housing (31), an electric actuator (42) and a valve handle (43); and the valve ball (41) is rotated by the electric actuator (42) via the valve handle (43).
